# EUROPEAN PATENT APPLICATION

(11) **EP 4 810 884 A1**
(43) Date of publication of application: **23.09.2026**
(21) Application number: 25883106.4
(22) Date of filing: 20.10.2025
(51) Int. Cl.: F26B 13/10, F26B 21/00, F26B 21/35, F26B 3/30, F26B 3/04, H01M 4/04

(54) **COATING MATERIAL DRYING APPARATUS AND BATTERY ELECTRODE MANUFACTURING SYSTEM COMPRISING SAME**

(30) Priority: 21.10.2024 KR 20240143650
(71) Applicant: LG Energy Solution, Ltd., Seoul 07335 (KR)
(72) Inventor: LEE, Ah-Reum, Daejeon 34122 (KR); KIM, Hyun-Jung, Daejeon 34122 (KR)
(74) Representative: Goddar, Heinz J.
(86) International application number: PCT/KR2025/016629
(87) International publication number: WO 2026/089414

(57) **Abstract**

A coating material drying apparatus according to the present disclosure is an apparatus for drying a coating material applied to a sheet-type substrate, and the coating material drying apparatus may include a drying furnace having a transfer passage where the sheet-type substrate is transferred and providing thermal energy to the transfer passage to dry the coating material applied to the sheet-type substrate; and a control unit for controlling the drying furnace, wherein the control unit may be configured to gradually reduce the amount of thermal energy provided per unit time to the transfer passage over time by controlling the drying furnace during a break period from a first time point at which the operation of a coater applying the coating material to the sheet-type substrate is halted until immediately before a second time point at which the operation of the coater is resumed.

## Description

### TECHNICAL FIELD

This application is based on and claims priority from Korean Patent Application No. 10-2024-0143650, filed on October 21, 2024, with the Korean Intellectual Property Office, the disclosure of which is incorporated herein in its entirety by reference.

The present disclosure relates to a coating material drying apparatus and a battery electrode manufacturing system including the same, and more specifically, to a coating material drying apparatus for drying a coating material applied to a sheet-type substrate and a battery electrode manufacturing system including the same.

### BACKGROUND ART

In general, an electrode assembly of a battery capable of repeated charging and discharging may be manufactured by stacking or winding several times a laminated structure in which a separator is interposed between a positive electrode and a negative electrode.

In this case, the positive electrode and the negative electrode may be manufactured by applying a slurry-state coating material containing a positive electrode active material or a negative electrode active material to a sheet-type substrate made of a metal material such as aluminum or copper, and then drying the same.

Additionally, the separator may be manufactured by applying a slurry-state coating material containing inorganic particles and a polymer binder to a sheet-type substrate made of a porous polymer material, and then drying the same.

In this way, during the process of manufacturing the electrode assembly of the battery, the output of the drying furnace used to dry the coating material should be appropriately controlled to improve the coating quality of the electrode or separator.

However, the existing technology has a problem that the thermal energy accumulated inside the drying furnace cannot be properly controlled while the coater applying the coating material is halted for a predetermined period of time according to a predetermined work schedule, or is halted for replacement of materials or parts, or for changing coating conditions or drying conditions, and thus the coating material is overdried to cause thermal wrinkles, cracks, or the like in the coating layer of the sheet-type substrate, or the coating material is not sufficiently dried to cause deformation of or damage to the coating layer.

### DISCLOSURE

### Technical Problem

The present disclosure is designed to solve the problems of the related art, and therefore the present disclosure is directed to providing a coating material drying apparatus capable of improving the speed and efficiency of the entire coating process by shortening the time for the drying rate of the coating material to reach a target drying rate while improving the coating quality and yield, and a battery electrode manufacturing system including the coating material drying apparatus.

### Technical Solution

A coating material drying apparatus according to one aspect of the present disclosure is an apparatus for drying a coating material applied to a sheet-type substrate, and the coating material drying apparatus includes a drying furnace having a transfer passage where the sheet-type substrate is transferred and providing thermal energy to the transfer passage to dry the coating material applied to the sheet-type substrate; and a control unit for controlling the drying furnace, wherein the control unit is configured to gradually reduce the amount of thermal energy provided per unit time to the transfer passage over time by controlling the drying furnace during a break period from a first time point at which the operation of a coater applying the coating material to the sheet-type substrate is halted until immediately before a second time point at which the operation of the coater is resumed.

In an embodiment, the drying furnace may include a fan for supplying hot air to the transfer passage, and the control unit may be configured to gradually reduce the rotational speed of the fan per unit time over time during the break period.

In an embodiment, the drying furnace may include at least one lamp irradiating infrared rays onto the transfer passage, and the control unit may be configured to gradually reduce the intensity of infrared rays irradiated from the at least one lamp over time during the break period.

In an embodiment, the drying furnace may include a plurality of lamps disposed in parallel along the transfer passage and irradiating infrared rays onto the transfer passage, and the control unit may be configured to gradually reduce the number of lamps irradiating infrared rays among the plurality of lamps over time during the break period.

In an embodiment, the coating material drying apparatus may further include a sensor sensing the first time point at which the operation of the coater is halted; and a timer measuring the elapsed time from the first time point, wherein the control unit may be configured to determine the output of the drying furnace providing thermal energy to the transfer passage with reference to the measured elapsed time.

In an embodiment, the sensor may be configured to further sense the second time point at which the operation of the coater is resumed after the first time point, and the timer may be configured to be reset when the second time point is sensed.

In an embodiment, the sensor may include at least one of a first sensor sensing whether power for operating the coater is being supplied to the coater and a second sensor sensing whether the coating material has been applied to the sheet-type substrate.

In an embodiment, the first sensor may include at least one of a voltage sensor and a current sensor.

In an embodiment, the second sensor may include at least one of a camera photographing the sheet-type substrate and a thickness sensor sensing changes in the thickness of the sheet-type substrate.

In an embodiment, the control unit may include a memory storing a table recording the reference output of the drying furnace for each elapsed time after the operation of the coater is halted; and a processor configured to determine the output of the drying furnace with reference to the measured elapsed time and the table.

In an embodiment, the control unit may be configured to maintain the output of the drying furnace providing thermal energy to the transfer passage when the amount of thermal energy provided to the transfer passage per unit time is reduced to a predetermined threshold value during the break period.

A battery electrode manufacturing system according to another aspect of the present disclosure includes the coating material drying apparatus described above.

### Advantageous Effects

According to the present disclosure, thermal energy is continuously provided into the drying furnace even during the break period of the coater applying coating material to the sheet-type substrate, and the amount of thermal energy provided is gradually reduced over time, which may shorten the drying time of the coating material applied to the sheet-type substrate when the coater is restarted, while preventing overdrying of the coating material due to thermal energy accumulated inside the drying furnace.

Additionally, according to the present disclosure, the coating layer is stabilized early by shortening the time required for the drying rate of the coating layer formed on one surface of the sheet-type substrate to reach the target drying rate, thereby allowing for the rapid initiation of the coating process on the other surface of the sheet-type substrate and improving the speed and efficiency of the entire coating process.

Additionally, according to the present disclosure, by preventing the occurrence of thermal wrinkles or cracks in the coating layer due to overdrying of the coating material, coating quality and yield may be improved, and loss of the substrate due to coating defects may be prevented.

Furthermore, those having ordinary skill in the art to which the present disclosure pertains will clearly understand from the following description that various embodiments according to the present disclosure may solve various technical problems not mentioned above.

### DESCRIPTION OF DRAWINGS

FIG. 1 is a block diagram showing a coating material drying apparatus according to an embodiment of the present disclosure.
FIG. 2 is a block diagram showing an example of a control unit of the coating material drying apparatus illustrated in FIG. 1.
FIG. 3 is a view showing a battery electrode manufacturing system according to an embodiment of the present disclosure.
FIG. 4 is a view showing a battery electrode manufacturing system according to another embodiment of the present disclosure.
FIG. 5 is a flowchart showing a drying process performed by a coating material drying apparatus according to an embodiment of the present disclosure.
FIG. 6 is a first graph showing changes in thermal energy inside the drying furnace according to the thermal energy provided to the drying furnace during the break period of the coater.
FIG. 7 is a second graph showing changes in thermal energy inside the drying furnace according to the thermal energy provided to the drying furnace during the break period of the coater.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted.

Additionally, the terms used in this specification are terms defined in consideration of functions in the present disclosure, which may vary depending on the intention or custom of the designer, manufacturer, and the like. Therefore, definitions of terms to be described below should be made based on the content throughout this specification.

Additionally, even without a separate description, it should be noted in advance that various embodiments related to different components of the present disclosure may be mutually combined depending on the number of cases unless they conflict with each other technically.

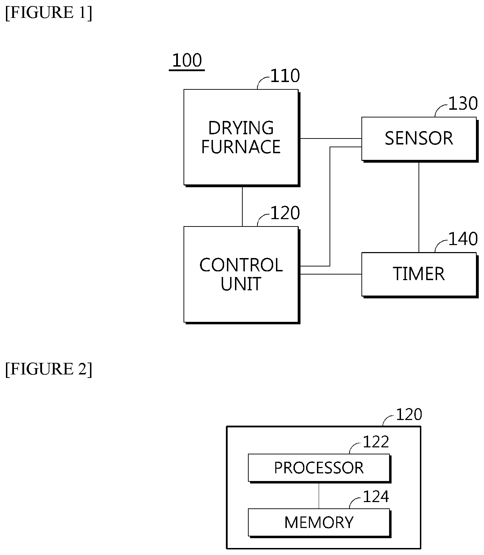

FIG. 1 is a block diagram showing a coating material drying apparatus according to an embodiment of the present disclosure.

As illustrated in FIG. 1, the coating material drying apparatus 100 according to the present disclosure is an apparatus for drying a coating material applied to a sheet-type substrate, and includes a drying furnace 110 and a control unit 120.

The drying furnace 110 have a transfer passage where the sheet-type substrate is transferred, and is configured to provide thermal energy to the transfer passage to dry the coating material applied to the sheet-type substrate.

The control unit 120 is configured to control the drying furnace 110.

In particular, the control unit 120 is configured to gradually reduce the amount of thermal energy provided per unit time to the transfer passage of the drying furnace 110 over time by controlling the drying furnace 110 during a break period from a first time point at which the operation of a coater applying the coating material to the sheet-type substrate is halted until immediately before a second time point at which the operation of the coater is resumed.

The reduction rate of the thermal energy provided to the transfer passage and the lower limit thereof may be variously determined depending on the heat retention capacity of the drying furnace 110, the heat loss rate, or the internal temperature of the drying furnace 110. For example, the reduction rate of the thermal energy and the lower limit thereof may be determined within a range that prevents the amount of thermal energy accumulated in the drying furnace 110 during a break period of the coater from increasing beyond an allowable range or decreasing below an allowable range.

The control unit 120 may include one or more general-purpose processors or application-specific integrated circuits (ASICs) for executing drying furnace control logic. Depending on the embodiment, the control unit 120 may selectively further include hardware such as a memory, a register, and the like.

The control unit 120 may be implemented as a combination of hardware such as a processor and software such as a computer program. That is, the drying furnace control logic of the control unit 120 may be configured as a computer program and stored in the control unit's 120 own memory or other storage medium, and the stored computer program may be configured to be executed through the hardware of the control unit 120.

In an embodiment, the drying furnace 110 may include a fan for supplying hot air to the transfer passage.

In this case, the control unit 120 may be configured to gradually reduce the rotational speed of the fan per unit time over time during the break period.

In an embodiment, the drying furnace 110 may include at least one lamp irradiating infrared rays onto the transfer passage.

In this case, the control unit 120 may be configured to gradually reduce the intensity of infrared rays irradiated from the at least one lamp over time during the break period.

In an embodiment, the drying furnace 110 may include a plurality of lamps disposed in parallel along the transfer passage and irradiating infrared rays onto the transfer passage.

In this case, the control unit 120 may be configured to gradually reduce the number of lamps irradiating infrared rays among the plurality of lamps over time during the break period.

Meanwhile, if the amount of thermal energy provided to the transfer passage per unit time decreases to a predetermined threshold value (lower limit) during the break period, the control unit 120 may be configured to maintain the output of the drying furnace 110 providing thermal energy to the transfer passage.

The threshold value may be determined as the value of the thermal energy provided to the transfer passage when the thermal energy provided to the transfer passage is balanced with the thermal energy lost from the drying furnace 110. In another embodiment, the threshold value may be determined by considering whether the coating material applied to the sheet-type substrate may be dried within a predetermined time after the end of the break period.

In an embodiment, the coating material drying apparatus 100 may further include a sensor 130.

The sensor 130 may be configured to sense a first time point at which the operation of the coater is halted and a second time point at which the operation of the coater is resumed.

In an embodiment, the sensor 130 may include at least one of a first sensor sensing whether power for operating the coater is being supplied to the coater and a second sensor sensing whether the coating material has been applied to the sheet-type substrate.

In this case, the first sensor may include at least one of a voltage sensor and a current sensor that sense the power supplied to the coater.

Additionally, the second sensor may include at least one of a camera photographing the sheet-type substrate and a thickness sensor sensing changes in the thickness of the sheet-type substrate.

In an embodiment, the sensor 130 may include a counter that counts the operating time of the coater. In this case, the sensor 130 may sense a time point at which the counting of the counter is halted as the first time point at which the operation of the coater is halted, and may sense a time point at which the counting of the counter is resumed as the second time point at which the operation of the coater is resumed.

The timer 140 may be configured to measure the elapsed time from the first time point at which the operation of the coater is halted when the sensor 130 senses the first time point, and to provide the measured elapsed time to the control unit 120.

In this case, the control unit 120 may determine the output of the drying furnace 110 providing thermal energy to the transfer passage with reference to the measured elapsed time.

Additionally, the timer 140 may be configured to be reset when the sensor 130 senses the second time point at which the operation of the coater is resumed. That is, when the second time point is sensed, the timer 140 may reset the measured elapsed time to zero.

FIG. 2 is a block diagram showing an example of a control unit of the coating material drying apparatus illustrated in FIG. 1.

As illustrated in FIG. 2, the control unit 120 of the coating material drying apparatus 100 according to the present disclosure may include a processor 122 and a memory 124.

The memory 124 may store a table recording the reference output of the drying furnace 110 for each elapsed time after the operation of the coater is halted.

The processor 122 may be configured to determine the output of the drying furnace 110 with reference to the elapsed time measured by the timer 140 and the table. That is, the processor 122 may check the reference output of the drying furnace 110 corresponding to the measured elapsed time from the table and determine the checked reference output as the output of the drying furnace 110.

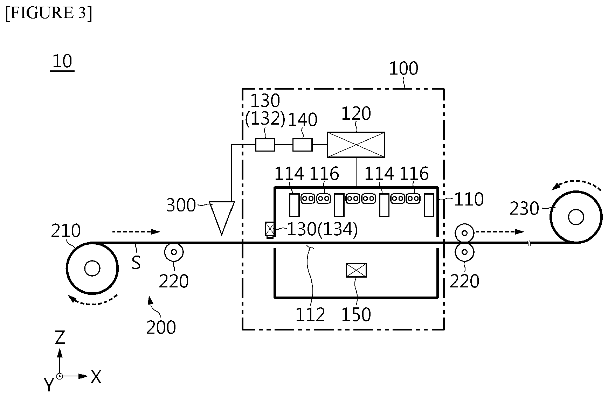

FIG. 3 is a view showing a battery electrode manufacturing system according to an embodiment of the present disclosure.

As illustrated in FIG. 3, the battery electrode manufacturing system 10 according to the present disclosure includes the coating material drying apparatus 100 described above. According to the embodiment, the battery electrode manufacturing system 10 according to the present disclosure may further include a transfer device 200 and a coater 300.

The transfer device 200 may be configured to transfer a sheet-type substrate S to be used in manufacturing a battery electrode to the coating material drying apparatus 100. To this end, the transfer device 200 may include an unwinder 210, a transfer roller 220, and a rewinder 230.

The unwinder 210 may be configured to unwind and move a sheet-type substrate S generally wound in a roll form. In this case, the unwinder 210 may include a wheel where the sheet-type substrate S wound in a roll form is fixed, and a motor (not shown) unwinding the sheet-type substrate S fixed to the wheel by rotating the wheel in a predetermined direction and speed.

In the present specification, the sheet-type substrate S may refer to various sheets used in manufacturing electrode assemblies of secondary batteries, such as a metal sheet for manufacturing a positive electrode, a metal sheet for manufacturing a negative electrode, or a porous polymer sheet for manufacturing a separator.

The transfer roller 220 may be configured to be disposed at various positions within the battery electrode manufacturing system 10 to facilitate the movement of the sheet-type substrate S.

The rewinder 230 may be configured to rewind the sheet-type substrate S where a coating material is applied and dried by the coating material drying apparatus 100. To this end, the rewinder 230 may include a wheel for rewinding the dried sheet-type substrate S, and a motor (not shown) rewinding the dried sheet-type substrate S by rotating the wheel in a predetermined direction and speed.

The coater 300 may be configured to apply a coating material to one surface of the sheet-type substrate S that is unwound by the unwinder 210 and transferred to the coating material drying apparatus 100.

The positive electrode of a battery serves as a source that releases lithium ions during charging of a secondary battery, and may determine the capacity and voltage of the secondary battery. This positive electrode may be manufactured by applying a coating material including a positive electrode active material, a conductive agent, and a binder to a sheet-type substrate made of a metal material such as aluminum, and then drying the coating material. Various materials such as LiCoO₂, LiMn₂O₄, LiFePO₄, LiNiCoAlO₂, LiNiMnCoO₂, or Li₂TiO₃ may be used as the positive electrode active material.

The negative electrode of a battery is a place that stores lithium ions during charging of a secondary battery, and may determine the charging speed of the secondary battery. This negative electrode may be manufactured by applying a coating material including a negative electrode active material, a conductive agent, and a binder to a sheet-type substrate made of a metal material such as copper, and then drying the coating material. Various materials such as natural graphite, artificial graphite, or low-crystalline carbon may be used as the negative electrode active material.

The separator of a battery is a key element for securing the safety of the battery, and is interposed between a positive electrode and a negative electrode and may play a role of allowing lithium ions to pass through while blocking contact between the positive electrode and the negative electrode. This separator may be manufactured by applying a coating material including a ceramic material and a polymer binder to a sheet-type substrate made of a porous polymer material such as polyethylene (PE) or polypropylene (PP), and then drying the coating material.

The coating material drying apparatus 100 according to the present disclosure is an apparatus for drying the coating material applied to the sheet-type substrate S by a coater 300, and is configured to dry the sheet-type substrate S by performing a drying process that prevents overdrying or incomplete drying of the coating material.

As described above, the coating material drying apparatus 100 includes a drying furnace 110 and a control unit 120.

The drying furnace 110 has a transfer passage 112 for transferring the sheet-type substrate S therein, and is configured to provide thermal energy to the transfer passage 112 to dry the coating material of the sheet-type substrate S passing through the transfer passage 112.

The control unit 120 is configured to control the drying furnace 110.

In particular, the control unit 120 is configured to gradually reduce the amount of thermal energy provided per unit time to the transfer passage 112 of the drying furnace 110 over time by controlling the drying furnace 110 during a break period from a first time point at which the operation of the coater 300 applying the coating material to the sheet-type substrate S is halted until immediately before a second time point at which the operation of the coater is resumed.

As described above, the reduction rate of the thermal energy provided to the transfer passage 112 and the lower limit thereof may be variously determined depending on the heat retention capacity of the drying furnace 110, the heat loss rate, or the internal temperature of the drying furnace 110. For example, the reduction rate of the thermal energy and the lower limit thereof may be determined within a range that prevents the amount of thermal energy accumulated in the drying furnace 110 during a break period of the coater 300 from increasing beyond an allowable range or decreasing below an allowable range.

The control unit 120 may include one or more general-purpose processors or application-specific integrated circuits (ASICs) for executing drying furnace control logic. Depending on the embodiment, the control unit 120 may selectively further include hardware such as a memory, a register, and the like.

The control unit 120 may be implemented as a combination of hardware such as a processor and software such as a computer program. That is, the drying furnace control logic of the control unit 120 may be configured as a computer program and stored in the control unit's 120 own memory or other storage medium, and the stored computer program may be executed through the hardware of the control unit 120.

In an embodiment, the drying furnace 110 may include a fan 114 for providing hot air into the transfer passage 112.

In this case, the control unit 120 may gradually reduce the rotational speed of the fan 114 per unit time over time by controlling the fan 114 during the break period of the coater 300.

In an embodiment, the drying furnace 110 may include at least one lamp 116 irradiating infrared rays onto the transfer passage 112. The lamp 116 may include a medium wave infrared (MIR) lamp irradiating mid-infrared rays in a wavelength band ranging from 1400 nm to 3000 nm.

In this case, the control unit 120 may gradually reduce the intensity of infrared rays irradiated from the at least one lamp 116 over time by controlling the at least one lamp 116 over time during the break period of the coater 300.

In an embodiment, the drying furnace 110 may include a plurality of lamps 116 disposed in parallel along the transfer passage 112 and irradiating infrared rays into the transfer passage 112.

In this case, the control unit 120 may gradually reduce the number of lamps irradiating infrared rays among the plurality of lamps 116 over time during the break period of the coater 300.

Meanwhile, if the amount of thermal energy provided to the transfer passage 112 per unit time decreases to a predetermined threshold value (lower limit) during the break period of the coater 300, the control unit 120 may maintain the output of the drying furnace 110 providing thermal energy to the transfer passage 112 at its current state.

The threshold value may be determined as the value of the thermal energy provided to the transfer passage 112 when the thermal energy provided to the transfer passage 112 is balanced with the thermal energy lost from the drying furnace 110. In another embodiment, the threshold value may be determined by considering whether the coating material applied to the sheet-type substrate S may be dried within a predetermined time in a range without overdrying after the end of the break period of the coater 300.

In an embodiment, the coating material drying apparatus 100 may further include a sensor 130.

The sensor 130 may be configured to sense a first time point at which the operation of the coater 300 is halted during the coating process, and a second time point at which the operation of the coater 300 is resumed.

In an embodiment, the sensor 130 may include at least one of a first sensor 132 sensing whether power for operating the coater 300 is being supplied to the coater 300 and a second sensor 134 sensing whether the coating material has been applied to the sheet-type substrate S.

In this case, the first sensor 132 may include at least one of a voltage sensor and a current sensor that sense the power supplied to the coater 300.

Additionally, the second sensor 134 may include at least one of a camera photographing the sheet-type substrate and a thickness sensor sensing changes in the thickness of the sheet-type substrate.

In an embodiment, the sensor 130 may include a counter (not shown) that counts the operating time of the coater 300. In this case, the sensor 130 may sense a time point at which the counting of the counter is halted as the first time point at which the operation of the coater 300 is halted, and may sense a time point at which the counting of the counter is resumed as the second time point at which the operation of the coater 300 is resumed.

In an embodiment, the coating material drying apparatus 100 may further include a timer 140.

The timer 140 may be configured to measure the elapsed time from the first time point at which the operation of the coater 300 is halted when the sensor 130 senses the first time point, and to provide the measured elapsed time to the control unit 120.

In this case, the control unit 120 may determine the output of the drying furnace 110 providing thermal energy to the transfer passage 112 with reference to the measured elapsed time.

Additionally, the timer 140 may be configured to be reset when the sensor 130 senses the second time point at which the operation of the coater 300 is resumed. That is, when the second time point is sensed, the timer 140 may reset the measured elapsed time to zero.

In an embodiment, the control unit 120 may include a memory storing reference heat information corresponding to the elapsed time from the time point at which the operation of the coater 300 is halted; and a processor controlling the drying furnace 110 with reference to the reference heat information.

As described with reference to FIG. 2, the control unit 120 may include a processor 122 and a memory 124.

The memory 124 may store a table recording the reference output of the drying furnace 110 for each elapsed time after the operation of the coater 300 is halted.

The processor 122 may determine the current output of the drying furnace 110 with reference to the elapsed time measured by the timer 140 and the table stored in the memory 124. That is, the processor 122 may check the reference output of the drying furnace 110 corresponding to the measured elapsed time from the table and determine the checked reference output as the current output of the drying furnace 110.

In an embodiment, the coating material drying apparatus 100 may include a temperature sensor 150 measuring the internal temperature of the transfer passage 112. In this case, the control unit 120 may be configured to determine in real time the amount of reduction in thermal energy provided to the transfer passage 112 of the drying furnace 110 during the break period of the coater 300 with reference to the temperature measured by the temperature sensor 150.

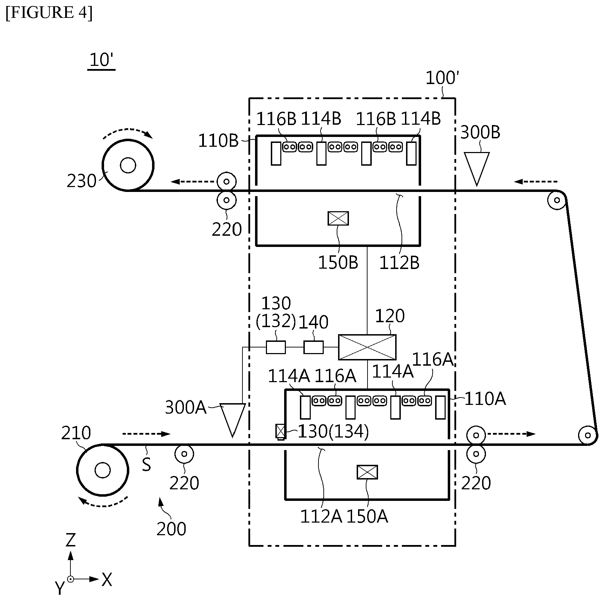

FIG. 4 is a view showing a battery electrode manufacturing system according to another embodiment of the present disclosure.

As illustrated in FIG. 4, the battery electrode manufacturing system 10' according to another embodiment of the present disclosure may include a coating material drying apparatus 100' according to a modified embodiment of the present disclosure.

Additionally, the battery electrode manufacturing system 10' may include a transfer device 200 for transferring a sheet-type substrate S, a first coater 300A for applying a coating material to a first surface among both surfaces of the sheet-type substrate S, and a second coater 300B for applying a coating material to a second surface among both surfaces of the sheet-type substrate S.

The coating material drying apparatus 100' may include a first drying furnace 110A for drying the coating material applied to the first surface of the sheet-type substrate S, a second drying furnace 110B for drying the coating material applied to the second surface of the sheet-type substrate S, and a control unit 120 for controlling these first and second drying furnaces 110A, 110B.

This battery electrode manufacturing system 10' may perform a roll to roll coating process of coating both surfaces of the sheet-type substrate S while the sheet-type substrate S is being transferred from the unwinder 210 of the transfer device 200 to the rewinder 230 via the transfer roller 220.

For example, when the first coater 300A applies a coating material to the first surface of the sheet-type substrate S, the first drying furnace 110A of the coating material drying apparatus 100' may dry the coating material applied to the first surface of the sheet-type substrate S.

Then, when the second coater 300B applies a coating material to the second surface of the sheet-type substrate S, the second drying furnace 110B of the coating material drying apparatus 100' may dry the coating material applied to the second surface of the sheet-type substrate S.

Meanwhile, when the operation of the first coater 300A is halted during the coating process, the control unit 120 may gradually reduce the amount of thermal energy provided per unit time to the transfer passage 112A of the first drying furnace 110A over time by controlling the first drying furnace 110A or the fan 114A and/or lamp 116A of the first drying furnace 110A during a first break period from a time point at which the operation of the first coater 300A is halted until immediately before a time point at which the operation of the first coater 300A is resumed.

Additionally, when the operation of the second coater 300B is halted during the coating process, the control unit 120 may gradually reduce the amount of thermal energy provided per unit time to the transfer passage 112B of the second drying furnace 110B over time by controlling the second drying furnace 110B or the fan 114B and/or lamp 116B of the second drying furnace 110B during a second break period from a time point at which the operation of the second coater 300B is halted until immediately before a time point at which the operation of the second coater 300B is resumed.

Meanwhile, the coating material drying apparatus 100' may further include a sensor 130 and a timer 140.

The sensor 130 may be configured to sense the time points at which the operations of the first coater 300A and/or the second coater 300B are halted and resumed.

In an embodiment, the sensor 130 may include at least one of a first sensor 132 sensing whether power for operating the first coater 300A or the second coater 300B is being supplied to the corresponding coater and a second sensor 134 sensing whether the coating material has been applied to the sheet-type substrate S.

In this case, the first sensor 132 may include at least one of a voltage sensor and a current sensor that sense the power supplied to the first coater 300A or the second coater 300B.

Additionally, the second sensor 134 may include at least one of a camera photographing the sheet-type substrate S and a thickness sensor sensing changes in the thickness of the sheet-type substrate S.

In an embodiment, the sensor 130 may include a counter (not shown) that counts the operating time of the first coater 300A or the second coater 300B. In this case, the sensor 130 may sense a time point at which the counting of the counter is halted as the first time point at which the operation of the first coater 300A or the second coater 300B is halted, and may sense a time point at which the counting of the counter is resumed as the second time point at which the operation of the first coater 300A or the second coater 300B is resumed.

FIG. 4 illustrates that the second sensor 134 is disposed at only the first drying furnace 110A, but according to an embodiment, it may be disposed at both the first drying furnace 110A and the second drying furnace 110B.

The timer 140 may be configured to measure the elapsed time from the time point at which the operation of the first coater 300A or the second coater 300B is halted, and to provide the measured elapsed time to the control unit 120.

Additionally, the timer 140 may be configured to be reset when the operation of the first coater 300A or the second coater 300B that has been in an idle state is resumed. That is, when the operation of the first coater 300A or the second coater 300B is resumed, the timer 140 may reset the elapsed time measured during the break period of the first coater 300A or the second coater 300B to zero.

In an embodiment, the control unit 120 of the coating material drying apparatus 100' according to the present disclosure may include a processor and a memory.

The memory may store a first table recording the reference output of the first drying furnace 110A for each elapsed time after the operation of the first coater 300A is halted. Additionally, the memory may store a second table recording the reference output of the second drying furnace 110B for each elapsed time after the operation of the second coater 300B is halted.

The processor may be configured to determine the current output of the first drying furnace 110A or the second drying furnace 110B with reference to the elapsed time measured by the timer 140 and the tables.

In an embodiment, the coating material drying apparatus 100' may include a first temperature sensor 150A measuring the internal temperature of the first drying furnace 110A. In this case, the control unit 120 may determine in real time the amount of reduction in thermal energy provided to the transfer passage 112A of the first drying furnace 110A during the break period of the first coater 300A with reference to the temperature measured by the first temperature sensor 150A.

In an embodiment, the coating material drying apparatus 100' may include a second temperature sensor 150B measuring the internal temperature of the second drying furnace 110B. In this case, the control unit 120 may determine in real time the amount of reduction in thermal energy provided to the transfer passage 112B of the second drying furnace 110B during the break period of the second coater 300B with reference to the temperature measured by the second temperature sensor 150B.

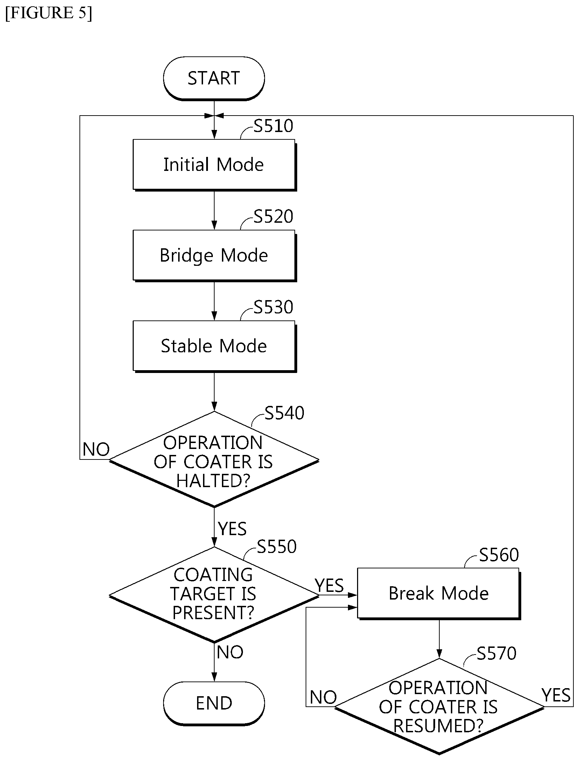

FIG. 5 is a flowchart showing a drying process performed by a coating material drying apparatus according to an embodiment of the present disclosure.

As illustrated in FIG. 5, when the coater applies a coating material to a sheet-type substrate, the control unit 120 described above may control the drying furnaces 110, 110A, 110B to dry the coating material applied to the sheet-type substrate in the order of initial mode (S510), bridge mode (S520), and stable mode (S530).

In the initial mode (S510), the control unit 120 may gradually increase the temperature with relatively low thermal energy and slowly induce evaporation of the solvent contained in the coating material.

Next, in the bridge mode (S520), the coating material drying apparatus may increase the amount of thermal energy provided to the coating material and allow a continuous solid network to be formed on the surface of and inside the coating material.

Next, in the stable mode (S530), the coating material drying apparatus may allow the residual solvent in the coating material to be removed in a diffusion-controlled manner while controlling the amount of thermal energy provided to the coating material.

While these coating and drying processes are continuously performed, the control unit 120 may sense whether the operation of the coater is halted (S540).

If the operation of the coater is halted and the sheet to be coated is not present, the control unit 120 may terminate the drying process (S550).

On the other hand, if the operation of the coater is temporarily halted but the sheet to be coated is still present, the control unit 120 may control the drying furnaces 110, 110A, 110B in break mode during the break period of the coater (S560).

In the break mode, the control unit 120 may control the drying furnaces 110, 110A, 110B or the fans 114, 114A, 114B and/or lamps 116, 116A, 116B of the drying furnaces 110, 110A, 110B so that the amount of thermal energy provided per unit time to the transfer passages 112, 112A, 112B of the drying furnaces 110, 110A, 110B is gradually reduced over time.

Meanwhile, when the operation of the coater is resumed, the control unit 120 may repeat the above-described series of drying modes (S510 to S530).

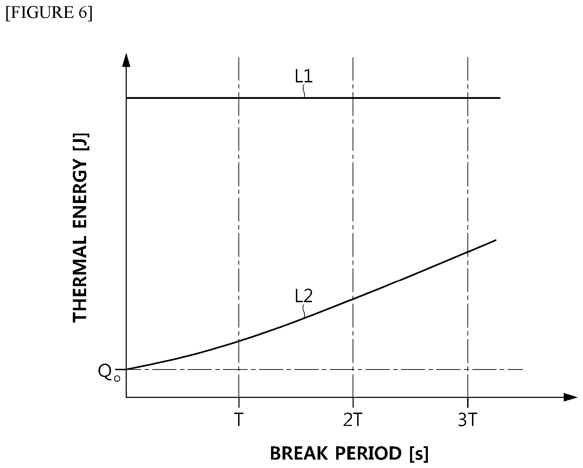

FIG. 6 is a first graph showing changes in thermal energy inside the drying furnace according to the thermal energy provided to the drying furnace during the break period of the coater.

In FIG. 6, L1 is a line representing the thermal energy provided to the transfer passage of the drying furnace, and L2 is a line representing the thermal energy inside the drying furnace.

As illustrated in FIG. 6, if the amount of thermal energy L1 provided to the transfer passage of the drying furnace remains constant during the break period of the coater, for example, if the RPM of the fan providing thermal energy to the transfer passage of the drying furnace and the infrared intensity of the lamp remain constant, the thermal energy L2 inside the drying furnace gradually increases over time, thereby exceeding the amount Qₒ of thermal energy required to initiate the drying process, leading to overdrying of the coating material.

In this case, even if the thermal energy provided to the transfer passage of the drying furnace is reduced after resuming the coating process, precise control of the drying temperature becomes difficult due to the thermal energy accumulated inside the drying furnace, and waiting until the thermal energy inside the drying furnace is reduced causes delays in the entire coating process and waste of thermal energy.

Additionally, even if no thermal energy is provided to the drying furnace during the break period of the coater to prevent overdrying of the coating material, reheating of the drying furnace is required when resuming the coating process, leading to delays in the entire coating process and a decrease in manufacturing efficiency.

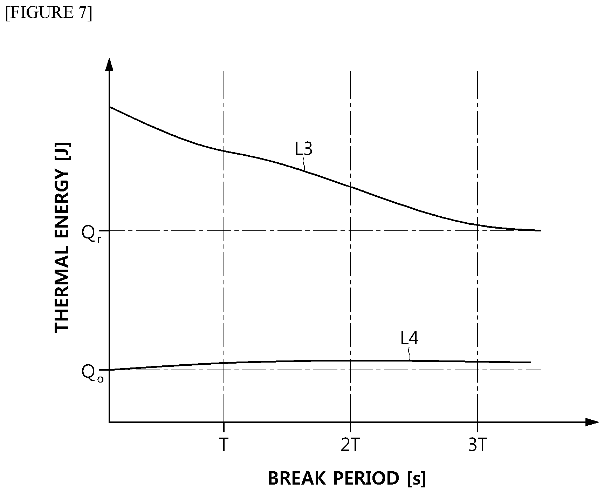

FIG. 7 is a second graph showing changes in thermal energy inside the drying furnace according to the thermal energy provided to the drying furnace during the break period of the coater.

In FIG. 7, L3 is a line representing the thermal energy provided to the transfer passage of the drying furnace according to the present disclosure, and L4 is a line representing the thermal energy inside the drying furnace.

As illustrated in FIG. 7, the coating material drying apparatus according to the present disclosure may gradually reduce the amount of thermal energy L3 provided to the transfer passage of the drying furnace over time during the break period of the coater.

That is, the control unit of the coating material drying apparatus according to the present disclosure may control the drying furnace in the break mode described with reference to FIG. 5 during the break period of the coater. In this break mode, the control unit may gradually reduce the amount of thermal energy L3 provided to the transfer passage of the drying furnace over time.

For example, during the break period of the coater, the control unit may gradually reduce at least one of the RPM of the fan and the infrared intensity of the lamp, which provide thermal energy to the transfer passage of the drying furnace, over time. As a result, the amount of thermal energy L4 inside the drying furnace may be maintained at a level similar to the amount Qₒ of thermal energy required to initiate the drying process.

Meanwhile, if the amount of thermal energy provided to the transfer passage of the drying furnace per unit time during the break period of the coater decreases to a predetermined threshold value Qᵣ, the control unit may maintain the current output of the drying furnace providing thermal energy to the transfer passage.

For example, the threshold value Qᵣ may be determined as the value of thermal energy provided to the transfer passage of the drying furnace when the thermal energy provided to the transfer passage of the drying furnace is balanced with the thermal energy lost from the drying furnace. In another embodiment, the threshold value Qᵣ may be determined by considering the thermal energy required to immediately dry the coating material applied to the sheet-type substrate in the initial mode described with reference to FIG. 5 after the end of the break period of the coater.

Therefore, according to the present disclosure, the target drying rate of the coating material may be achieved early while preventing waste of thermal energy, and the speed and efficiency of the entire coating process may be improved.

Table 1 below shows the results of experiments comparing the drying time of the coating material in a comparative example where the coated substrate was dried after the thermal energy provided to the drying furnace during the break period of the coater was maintained constant as shown in FIG. 6, and in an embodiment where the coated substrate was dried after the thermal energy provided to the drying furnace during the break period of the coater was gradually reduced according to the present disclosure.

For relative comparison, in the comparative example and the embodiment, the same substrate and the same coating material in the same drying furnace were used for drying.

**[Table 1]**

| | Comparative Example | Embodiment |
|---|---|---|
| Coating stabilization time [min] | 5.07 | 4.73 |
| Time to first reach target drying rate (Std Dev) [min] | 2.12 (2.59) | 1.76 (1.40) |
| Coating waiting time (Std Dev) [min] | 4.02 (3.02) | 3.13 (1.78) |

In Table 1, the 'coating stabilization time' represents the time required from the start of coating on the first surface of the substrate until the drying rate of the coating layer formed on the first surface stably reaches the range of ±1% of the target drying rate.

The 'time to first reach target drying rate' represents the time required from the start of coating on the first surface of the substrate until the drying rate of the coating layer formed on the first surface first reaches the range of ±1% of the target drying rate.

The 'coating waiting time' represents the time required from the start of coating on the first surface of the substrate to the start of coating on the second surface of the substrate.

As shown in Table 1, the 'coating stabilization time' of the embodiment according to the present disclosure is 4.73 minutes, which is about 20 seconds shorter than the 5.07 minutes of the comparative example. That is, according to the present disclosure, it can be seen that the coating time is shortened.

Additionally, the 'time to first reach target drying rate' of the embodiment according to the present disclosure is 1.76 minutes (standard deviation 1.40 minutes), which is about 21 seconds shorter than the 2.12 minutes (standard deviation 2.59 minutes) of the comparative example. That is, according to the present disclosure, it can be seen that the drying rate of the coating layer may quickly reach the target drying rate.

Additionally, the 'coating waiting time' of the present disclosure is 3.13 minutes (standard deviation 1.78 minutes), which is about 53 seconds shorter than the 4.02 minutes (standard deviation 3.02 minutes) of the comparative example. That is, according to the present disclosure, it can be seen that the time required for coating both surfaces of the substrate may be shortened.

As described above, according to the present disclosure, thermal energy is continuously provided into the drying furnace even during the break period of the coater applying coating material to the sheet-type substrate, and the amount of thermal energy provided is gradually reduced over time, which may shorten the drying time of the coating material applied to the sheet-type substrate when the coater is restarted, while preventing overdrying of the coating material due to thermal energy accumulated inside the drying furnace.

Additionally, according to the present disclosure, the coating layer is stabilized early by shortening the time required for the drying rate of the coating layer formed on one surface of the sheet-type substrate to reach the target drying rate, thereby allowing for the rapid initiation of the coating process on the other surface of the sheet-type substrate and improving the speed and efficiency of the entire coating process.

Additionally, according to the present disclosure, by preventing the occurrence of thermal wrinkles or cracks in the coating layer due to overdrying of the coating material, coating quality and yield may be improved, and loss of the substrate due to coating defects may be prevented.

Furthermore, it is obvious that embodiments according to the present disclosure may solve various other technical problems in addition to those mentioned in this specification in present technical field as well as in the relevant technical field.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### [List of Reference Numerals]

10, 10': Battery electrode manufacturing system
100, 100': Coating material drying apparatus
110, 110A, 110B: Drying furnace
112, 112A, 112B: Transfer passage
114, 114A, 114B: Fan
116, 116A, 116B: Lamp
120: Control unit
122: Processor
124: Memory
130: Sensor
140: Timer
200: Transfer device
300, 300A, 300B: Coater

## Claims

1. A coating material drying apparatus for drying a coating material applied to a sheet-type substrate, the coating material drying apparatus comprising:
a drying furnace having a transfer passage where the sheet-type substrate is transferred and providing thermal energy to the transfer passage to dry the coating material applied to the sheet-type substrate; and
a control unit for controlling the drying furnace,
wherein the control unit is configured to gradually reduce the amount of thermal energy provided per unit time to the transfer passage over time by controlling the drying furnace during a break period from a first time point at which the operation of a coater applying the coating material to the sheet-type substrate is halted until immediately before a second time point at which the operation of the coater is resumed.

2. The coating material drying apparatus according to claim 1,
wherein the drying furnace comprises a fan for supplying hot air to the transfer passage, and
wherein the control unit is configured to gradually reduce the rotational speed of the fan per unit time over time during the break period.

3. The coating material drying apparatus according to claim 1,
wherein the drying furnace comprises at least one lamp irradiating infrared rays onto the transfer passage, and
wherein the control unit is configured to gradually reduce the intensity of infrared rays irradiated from the at least one lamp over time during the break period.

4. The coating material drying apparatus according to claim 1,
wherein the drying furnace comprises a plurality of lamps disposed in parallel along the transfer passage and irradiating infrared rays onto the transfer passage, and
wherein the control unit is configured to gradually reduce the number of lamps irradiating infrared rays among the plurality of lamps over time during the break period.

5. The coating material drying apparatus according to claim 1, further comprising:
a sensor sensing the first time point at which the operation of the coater is halted; and
a timer measuring the elapsed time from the first time point,
wherein the control unit is configured to determine the output of the drying furnace providing thermal energy to the transfer passage with reference to the measured elapsed time.

6. The coating material drying apparatus according to claim 5,
wherein the sensor is configured to further sense the second time point at which the operation of the coater is resumed after the first time point, and
wherein the timer is configured to be reset when the second time point is sensed.

7. The coating material drying apparatus according to claim 5,
wherein the sensor comprises at least one of a first sensor sensing whether power for operating the coater is being supplied to the coater and a second sensor sensing whether the coating material has been applied to the sheet-type substrate.

8. The coating material drying apparatus according to claim 7,
wherein the first sensor comprises at least one of a voltage sensor and a current sensor.

9. The coating material drying apparatus according to claim 7,
wherein the second sensor comprises at least one of a camera photographing the sheet-type substrate and a thickness sensor sensing changes in the thickness of the sheet-type substrate.

10. The coating material drying apparatus according to claim 5,
wherein the control unit comprises:
a memory storing a table recording the reference output of the drying furnace for each elapsed time after the operation of the coater is halted; and
a processor configured to determine the output of the drying furnace with reference to the measured elapsed time and the table.

11. The coating material drying apparatus according to claim 1,
wherein the control unit is configured to maintain the output of the drying furnace providing thermal energy to the transfer passage when the amount of thermal energy provided to the transfer passage per unit time is reduced to a predetermined threshold value during the break period.

12. A battery electrode manufacturing system comprising a coating material drying apparatus according to any one of claims 1 to 11.
